# EUROPEAN PATENT APPLICATION

(11) **EP 3 706 055 A1**
(43) Date of publication of application: **09.09.2020**
(21) Application number: 17930465.4
(22) Date of filing: 24.11.2017
(51) Int. Cl.: G06Q 10/08, G06Q 50/28

(54) **LOCKER MANAGEMENT SYSTEM**

(30) Priority: 01.11.2017 JP 2017211952
(71) Applicant: Fujisawa, Kazunori, Tokyo 160-8486 (JP); Yodobashi Camera Co., Ltd., Tokyo 160-8486 (JP)
(72) Inventor: FUJISAWA Kazunori, Tokyo 160-8486 (JP)
(74) Representative: Grünecker Patent- und Rechtsanwälte PartG mbB
(86) International application number: PCT/JP2017/042216
(87) International publication number: WO 2019/087411

(57) **Abstract**

To improve the turnover rate of lockers in a locker management system. A locker management system includes a management server that manages a status of delivery of a product from a logistics center to a locker base and a status of storage of the product at the locker base over a predetermined period of time. The locker base is provided with an electronically controlled locker for storing the product, and the management server receives a specification of a locker base for storing the product and a specification of the predetermined period of time over which the product is stored at the locker base when the product is ordered from a terminal of a customer, manages the predetermined period of time over which the product delivered from the logistics center to the locker base is stored in the electronically controlled locker, and performs a check processing for allowing the product stored in the electronically controlled locker to be taken out of the electronically controlled locker if the customer visits the locker base within the predetermined period of time, or notifies the terminal of the customer that the product having been stored in the electronically controlled locker is now stored at another place in the locker base if the customer does not visit the locker base within the predetermined period of time.

## Description

### Technical Field

The present invention generally relates to a locker management system that allows delivery of an article or product via lockers, for example. In particular, it relates to a locker management system that allows smooth delivery of a product purchased through online shopping or the like.

### Background Art

Various locker management system technologies have been provided which use delivery lockers, electronically controlled lockers or the like for delivery of an article or product.

For example, a system that allows a product purchased by a purchaser through online shopping of the like to be smoothly delivered from a logistics company to the purchaser via a box has been proposed (Patent Literature 1).

Specifically, Patent Literature 1 discloses a delivery management system including a client, a logistics server that manages delivery of a product in response to a request from the client, and an agent server that manages distribution of the product to be delivered, the client, the logistics server and the agent server being connected to each other by a communication network, and the delivery management system further including means for allowing the logistics server and the client to determine a scheduled delivery date and time for the product being delivered and an agent server to be used, and means for allowing the agent server to notify at least one of the logistics server and the client of storage and retrieval of the product being delivered to and from the agent, wherein the agent server has a shared delivery locker including a plurality of boxes, a box opening and closing device that checks that a door of each box is closed and locks and unlocks each box, and a box monitoring device that checks the presence of an object in each box, and the agent server includes means for determining storage and retrieval of the product being delivered using the box opening and closing device and the box monitoring device.

Furthermore, a logistics system that uses stations to allow a product to be delivered in a series of steps has been proposed (Patent Literature 2).

Specifically, Patent Literature 2 discloses a logistics system using stations including a server, a virtual store built on the server that presents information on products, and a plurality of customer terminals capable of connecting to the server, wherein the customer terminal connects to the virtual store, a customer chooses a product from among the products presented at the virtual store and then transmits authentication data concerning the customer to the server, the server checks the authentication data and orders the product, and the logistics system distributes sales slip data concerning the ordered product transmitted from the server to the customer terminal, each of stations at which the logistics system is deployed is provided with a reception device including a storage unit that stores the sales slip data transmitted from the server, an input unit to which reception data transmitted from the server to the customer is input, a check unit that checks the reception data against the sales slip data stored in the storage unit, and a checkout unit that performs a checkout of the product ordered by the customer after the checking, a locker having a large number of storage boxes for storing products is installed near the reception device, and when picking up the product, the customer performs a series of steps of confirming that the authentication data stored in the storage unit of the reception device and the reception data input by the customer agree with each other, and then picking up the ordered product.

Furthermore, a system for allowing a customer to pick up a product purchased online at a locker has been proposed. The system allows the customer to purchase a product in an optimal way by allowing the customer to purchase a product at a store the customer likes and pick up the product at a locker the customer likes on a day the customer likes (Patent Literature 3).

Specifically, Patent Literature 3 discloses an order receiving and selling system that mediates in the delivery of a product to a customer via a product pickup locker, including means for allowing a customer terminal to specify a product pickup locker, means for allowing the customer terminal to specify a scheduled date of pickup of a product to be purchased, means for reserving a locker room of the locker for product pickup on the scheduled date of pickup, and means for notifying the customer terminal of the reserved locker room and of means for unlocking a lock device.

### Citation List

### Patent Literature

Patent Literature 1: Japanese Patent Laid-Open No. 10-162065
Patent Literature 2: Japanese Patent Laid-Open No. 2002-140632
Patent Literature 3: Japanese Patent Laid-Open No. 2002-288562

### Summary of Invention

### Technical Problem

However, with the conventional locker management systems, delivery boxes or delivery lockers cannot be used when they are already occupied. That is, the conventional locker management systems still need to be improved from the viewpoint of turnover rate of the lockers. Considering the cost correlated with the utilization of the lockers and the footprint of the lockers, it is desirable to maximize the turnover rate of the lockers.

For this reason, when a customer does not come to pick up a product until the scheduled pickup date as described in Patent Literature 3, for example, a more flexible action than simply asking the customer to pick up the product needs to be taken.

Furthermore, the pickup time or the like needs to be more flexibly adjusted and managed by the pickup point and the user (customer).

### Solution to Problem

To solve the problems described above, a locker management system according to an embodiment of the present invention is a locker management system, comprising a management server that manages a status of delivery of a product from one or more logistics centers to a plurality of locker bases and a status of storage of the product at a locker base over a predetermined period of time, wherein the locker base is provided with an electronically controlled locker for storing the product, and the management server receives a specification of a locker base for storing the product and a specification of the predetermined period of time over which the product is stored at the locker base when the product is ordered from a terminal of a customer, manages the predetermined period of time over which the product delivered from a logistics center to the locker base is stored in the electronically controlled locker, and performs a check processing for allowing the product stored in the electronically controlled locker to be taken out of the electronically controlled locker if the customer visits the locker base within the predetermined period of time, or notifies the terminal of the customer that the product having been stored in the electronically controlled locker is now stored at another place in the locker base if the customer does not visit the locker base within the predetermined period of time.

The management server receives a request for change of the predetermined period of time from the terminal of the customer.

### Advantageous Effects of Invention

The locker management system according to the embodiment of the present invention has advantages that the turnover rate of delivery boxes or delivery lockers can be improved, the shortage of available lockers can be overcome, and the pickup of a product or the like by a user at a pickup point can be more flexibly adjusted and managed, for example.

### Brief Description of Drawings

[Figure 1] Figure 1 is a diagram for illustrating facilities, distribution channels and the like in a locker management system according to an embodiment of the present invention.
[Figure 2] Figure 2 is a diagram for illustrating a locker base in the locker management system according to the embodiment of the present invention.
[Figure 3] Figure 3 is a diagram for illustrating an example of a general configuration of the locker management system according to the embodiment of the present invention.
[Figure 4] Figure 4 is a diagram for illustrating a functional block configuration of a management server in the locker management system according to the embodiment of the present invention.
[Figure 5] Figure 5 is a diagram for illustrating an example of an appearance of an information processing device (user terminal) in the locker management system according to the embodiment of the present invention.
[Figure 6] Figure 6 is a diagram for illustrating a functional block configuration of hardware forming the information processing device according to the embodiment of the present invention.
[Figure 7] Figure 7 is a diagram for illustrating a flow of operations or processings performed in the locker management system according to the embodiment of the present invention.
[Figure 8] Figure 8 is a diagram for illustrating a flow of operations or processings performed in the locker management system according to the embodiment of the present invention.
[Figure 9] Figure 9 is a diagram for illustrating an example of a window displayed on the information processing device (user or customer terminal) in the locker management system according to the embodiment of the present invention.
[Figure 10] Figure 10 is a diagram for illustrating an example of another window displayed on the information processing device (user or customer terminal) in the locker management system according to the embodiment of the present invention.
[Figure 11] Figure 11 is a diagram for illustrating an example of another window displayed on the information processing device (user or customer terminal) in the locker management system according to the embodiment of the present invention.
[Figure 12] Figure 12 is a diagram for illustrating an example of another window displayed on the information processing device (user or customer terminal) in the locker management system according to the embodiment of the present invention.

### Description of Embodiment

In the following, a locker management system according to an embodiment of the present invention will be described in detail with reference to the drawings.

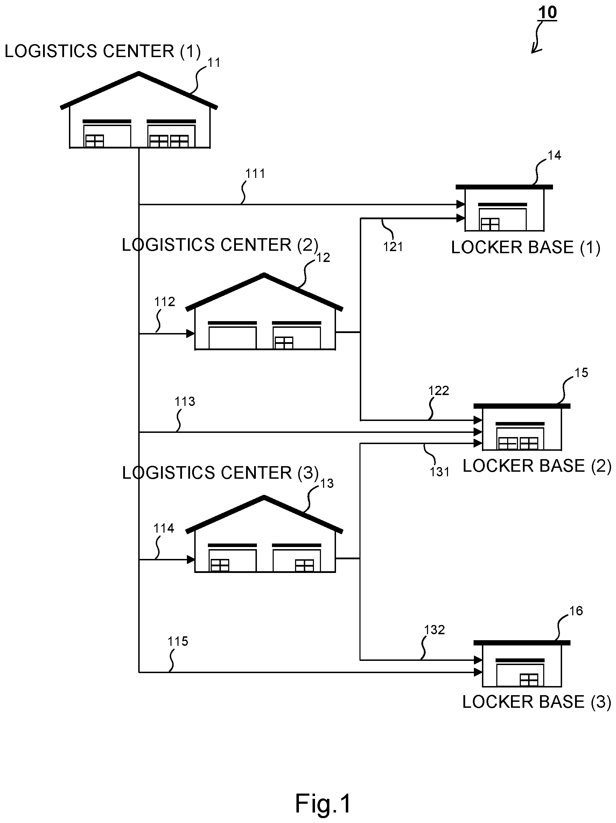

Figure 1 schematically shows facilities and distribution channels or the like in the locker management system according to the embodiment of the present invention. As shown in this drawing, from the viewpoint of the facilities and the distribution channels, a locker management system 10 provides a logistics network for products or the like generally including logistics centers 11 to 13 and locker bases 14 to 16.

The numbers of the logistics centers 11 to 13 and the locker bases 14 to 16 are not limited to those shown in the drawing, and the system can include any numbers of centers and bases. In the following, for the sake of convenience and for the ease of understanding of the present invention, the system will be described with regard to the model shown in Figure 1.

### [Basic Concept of Invention: Logistics Center and Locker Base]

The locker management system according to one embodiment of the present invention is characterized in that the system includes at least these two types of facilities. In a basic concept, the logistics center is a conventional logistics base, and in addition to the logistics center, the locker base according to one embodiment of the present invention provided with an electronically controlled locker for temporarily storing a product, a baggage or the like is provided as a receiving base.

That is, the locker base is a receiving base specific to the present invention that is provided with a locker for passing a product or the like delivered from the logistics center to a customer or the like, and the logistics network including this locker base forms a basic concept of the present invention.

As shown in Figure 1, different logistics centers may have different roles. For example, in this drawing, the logistics center 12 distributes products or the like to the locker bases 14 and 15 along channels 121 or 122, and the logistics center 13 distributes products or the like to the locker bases 15 and 16 along channels 131 and 132, while the logistics center 11 distributes products or the like to the other logistics centers 12 and 13 along channels 112 and 114, and distributes products or the like to the locker bases 14, 15 and 16 along channels 111, 113 and 115. For example, although the locker base 14 usually receives products or the like from the logistics center 12, which is geometrically close to the locker base 14, the locker base 14 may receive products or the like from the logistics center 11 if the logistics center 12 is out of stock.

Although not shown in Figure 1, a channel along which any of the logistics centers 11 to 13 can directly deliver products or the like to houses of customers may be provided (this implementation is not shown in the drawing because it is not essential for the present invention).

### [Logistics Management]

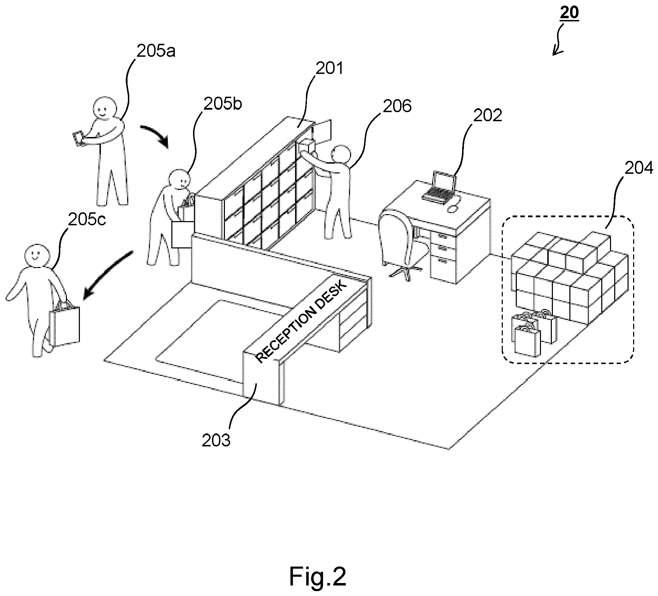

The time (estimated time) required for distribution or delivery and the number of products or the like in stock at bases are managed on the system, although the present invention is not limited to the implementation. An example of a general configuration of the locker management system according to one embodiment of the present invention will be described later with reference to Figure 2. For example, a management server in the locker management system according to one embodiment of the present invention can be installed in any of the logistics center or locker base shown in Figure 1 or an office building of a company or the like (not shown), and the management server can be connected to each center and each base via an information terminal and a network and constantly manage the stock status and the numbers of storage and retrieval of products or the like at each base or the like and the status of distribution or delivery between the bases or to destinations. Furthermore, from these pieces of information, the management server can compute the time required for distribution or delivery between the bases or to destinations and can manage information constantly updated in this way.

For this reason, each channel in Figure 1 is not always the only route. For example, although the system designates the channel 111 as a channel from the logistics center 11 to the locker base 14 in Figure 1, one or more other routes may be stored as an alternative route.

Such an alternative route can be taken depending on the traffic condition, for example, and can be indicated to a particular distribution facility (base) or distribution means (delivery vehicle).

### [Sales Management]

The locker management system according to one embodiment of the present invention can also perform sales management of products or the like. The locker management system according to one embodiment of the present invention is associated with a mail-order (electronic commerce) system or a POS terminal at a store (not shown) and can manage the mail-order sales record or the sales record of the store on a customer basis. To this end, in one embodiment, the management server has the databases (D1) to (D5) described below, which can be referred to or requested for update by various terminals.

### (D1) Customer Management Database

An item of data concerning a customer is registered with a customer management database. Specifically, private information on a customer, such as name, address or telephone number, and supplementary information, such as the points on a card of the customer or a locker base frequently visited by the customer, are registered.

### (D2) Product Management Database

An item of data concerning a product is registered with a product management database. Specifically, a product name, a product code associated with a JAN code or the like is registered and managed.

### (D3) Stock Management Database

A stock management database is used to manage the stock of products of each of sales locations (sales area). As required, the stock management database is associated with the product management database to derive or extract a required table.

### (D4) Warehouse Management Database

A warehouse management database is used to manage the stock of products stored in a warehouse at a logistics center or the like.

### (D5) Sales Management Database

A sales management database is a record management database used to manage the record of sold products on a basis of sales location or store.

### [Functions of Locker Base]

In a logistics system including the locker management system according to one embodiment of the present invention, the locker base serves the functions described below (the list includes system operations and works of workers, such as base staff, altogether).
(1) Receive products from logistics centers.
(2) Assort and store products on a delivery time basis.
(3) Check the pickup time at the locker and allocate a locker to each product.
(4) Notify the terminal application of customers of the allocated locker and the unlocking combination number for the locker.
(5) Accept pickup time change requests from customers.
(6) Take out from the locker any product that has not been picked up until the designated time, store the product in the assortment area (storage area), and notify the terminal application of the customer of the change of storage location.
(7) Service customers at the reception desk.

Of the functions (1) to (7), the system (such as a base terminal 202 or a management server 31) can automatically perform at least the check (determination) processing and/or the locker allocation processing involved with the function (3), the unlocking number generation processing or the unlocking number notification processing involved with the function (4), or other processings or notifications.

In one embodiment of the present invention, the distributions from the logistics centers to the locker bases are undertaken by one delivery company and are not entrusted to other delivery companies or the like. For example, the company's vehicles deliver products several times a day.

Figure 2 shows the locker base in the locker management system according to one embodiment of the present invention.

As shown in Figure 2, a locker base 20 includes an electronically controlled locker 201 that can be opened and closed from inside and outside of the building of the base, a base terminal 202 installed in the building of the base, a reception desk 203, and a storage area 204. The storage area 204 may serve also as an assortment area, for example.

The electronically controlled locker 201 is an example of equipment for temporarily storing a product, a baggage or the like, and alternative storing equipment can be used without departing from the spirit of the present invention.

With the locker management system according to one embodiment of the present invention, a user (customer) 205a who has purchased a product on a user terminal through a mail-order service does not have to visit the store and can receive the purchased product at a locker base near the user's home or near the station nearest to the user's home. In one embodiment, the user (customer) 205b can pick up the purchased product previously put in the locker 201 in the locker base, following an instruction transmitted to the user terminal. In one embodiment, a staff member 206 puts the product in the locker 201. The instruction transmitted to the user terminal, the procedure of unlocking the allocated locker and the like will be described later.

The user (customer) 205c having successfully picked up the purchased product from the locker 201 goes home with the product.

However, the user can only pick up the purchased product only within a limited period of time. After a lapse of a predetermined time since the purchased product is put in a predetermined box of the locker 201, the product is taken out by the staff member 206 and securely stored at another location (storage area 204) in the building of the base. The user terminal can be notified of this.

The user having received the notification can visit the locker base at a later date and directly receives the purchased product from the staff member 206 over the reception desk 203.

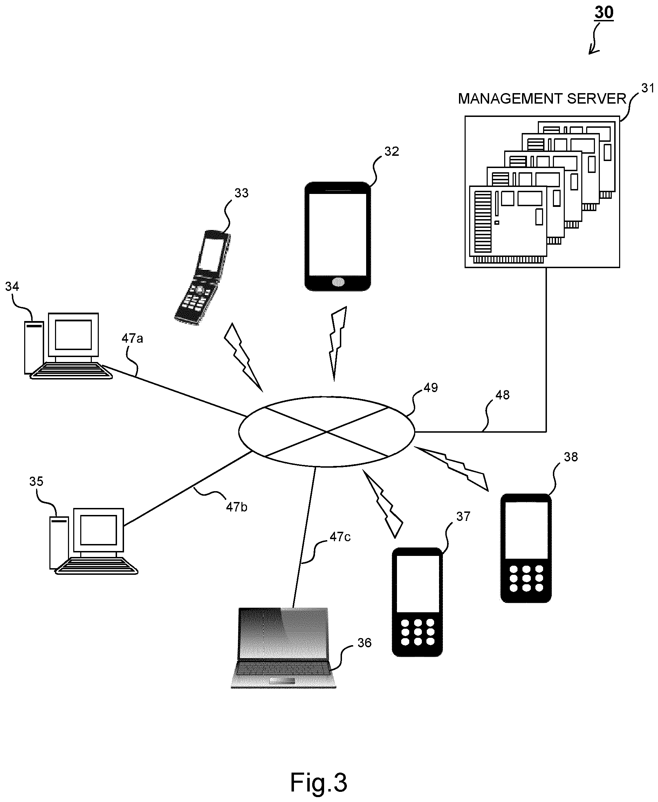

Figure 3 shows an example of a general configuration of the locker management system according to one embodiment of the present invention.

As shown in Figure 3, a locker management system 30 according to one embodiment includes a management server 31 and various information processing devices used by a user (customer), a delivery person, locker base staff or the like (In the drawing, a mobile information terminal or tablet terminal 32, a cellular phone 33, PCs 34 to 36, and POS terminals 37 to 38 are shown for the sake of illustration. These information processing devises will be referred to also as "various terminals" or "terminals" hereinafter). As shown in Figure 3, the management server 31 and the various terminals are communicatively interconnected by a dedicated line or a public line, such as the Internet (including wired lines 47a to 49). The lines can be wired or wireless. For example, the mobile information terminal or tablet terminal 32, the cellular phone 33 and the POS terminals 37 to 38 wirelessly connect to the Internet 49 via a base station, access point or the like (not shown), and is further communicatively connected to the management server 31 by a line 48.

The access point described above is radio equipment that interconnects wireless terminals, such as PCs or smartphones, or connects wireless terminals to another network. Typically, the access point is a device that operates according to the communication protocols of the first layer (physical layer) and the second layer (data link layer) of the OSI reference model.

Many of the cellular phones and the mobile information terminals or tablets at the time of filing of this application have a processing power (communication rate, image processing capability or the like) comparable to that of personal computers (PCs) and therefore can be regarded as a small-size computer.

A program or software required to implement the present invention is typically installed or stored in a hard disk drive (HDD), a solid state drive (SSD) or other memory in a storage module of a PC or mobile information terminal. To execute the program or software, a part or the whole of the program or software is loaded as a software module into the memory in the storage module as required and computationally executed by a CPU.

Alternatively, a browser-based computer or mobile information terminal may be used. In that case, a program is distributed from another server or computer to the terminal as required, and the browser on the terminal executes the program.

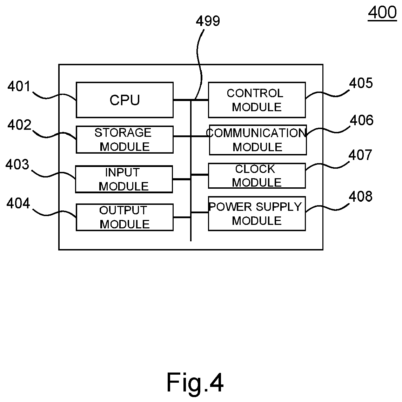

The management server 31 can also have a basically PC-based hardware configuration (such a hardware configuration will be described later with reference to Figure 4, just to be sure). Note that, as required, the management server 31 can include a plurality of PCs (such as several tens to several thousands of PCs) operating in parallel so that the hardware capacity of the management server 31 is improved and a vast amount of data can be processed, although the present invention is not limited to such a configuration.

Depending on the system configuration, part of the information processing terminals described above (the base terminal 202, for example) can also perform a part or the whole of the functionality of the management server 31.

Figure 4 is a functional block diagram showing the management server 31 in the locker management system according to one embodiment of the present invention. For example, the operation of the management server is provided by operation of each piece of hardware described below and cooperation of these pieces of hardware and software.

A management server 400, which is shown as the whole of a hardware block in Figure 4, is generally formed by a CPU 401 that performs various comparisons and computations, a storage module 402 such as a RAM, a ROM or a flash memory, an input module 403 such as a keyboard or a pointing device, an output module 404 such as a display or a speaker, a control module 405 for various signal controls, a communication (interface) module 406 (which may be wired or wireless), a clock module 407 for measuring time or the like, and a power supply module 408.

These modules are appropriately connected to each other by a communication bus or a power supply line (collectively shown as a connection line 499 for the sake of convenience in Figure 4, although the line 499 actually includes a plurality of different lines) as required.

A program or software required to implement the present invention executed on the management server 400 is typically installed or stored in an HDD, an SSD, a flash memory or the like forming the storage module 402. To execute the program or software, a part or the whole of the program or software is loaded as a software module into the memory in the storage module 402 as required and computationally executed by the CPU 401.

The computational execution necessarily does not have to be performed by a central processing module such as the CPU 401, and can be performed by an auxiliary computing device, such as a digital signal processor (DSP), (not shown).

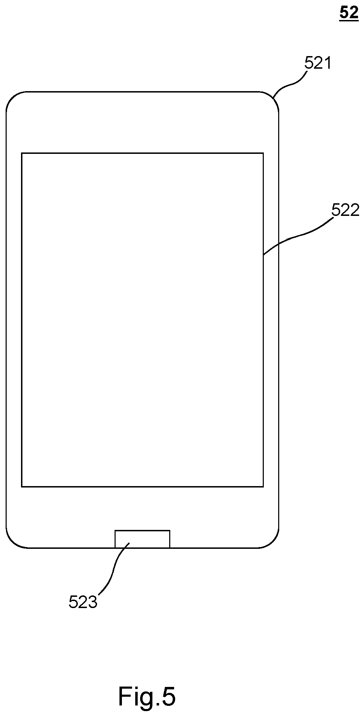

Figure 5 shows an appearance of a tablet terminal 52 as an information processing device in the locker management system according to one embodiment of the present invention. In Figure 5, the information processing device (tablet terminal) 52 includes a housing 521, a display 522, and a hardware button 523 provided in a central part of a lower part of the housing 521. The display 522 is typically a liquid crystal display (LCD) or the like and can display various kinds of information, such as characters or a still or moving image. The display 522 can display a menu button or software keyboard, which can be touched with a finger, a stylus (not shown) or the like to input an instruction (command) to the tablet terminal 52. Therefore, the hardware button 523 described above is not an essential component. However, the hardware button 523 is provided as a button having a particular function for the convenience of explanation of the present invention. Of course, the hardware button 523 can be replaced by a menu button displayed in an area of the display 522.

The display 522 further includes a multi-touch input panel, and coordinates of the location of touch input on the touch input panel are transmitted to the processing system (CPU) of the tablet terminal 52 via an input device interface (not shown) and processed. The multi-touch input panel is configured to be capable of sensing a plurality of points of contact with the panel at the same time. The detection (sensing) can be achieved in various manners, and not only a contact sensor but also an optical sensor can be used to detect the points of contact with the panel. As an alternative to the contact sensor and the optical sensor, an electrical capacitance pressure sensor that senses contact with a human skin can also be used.

Although not shown in Figure 5, the tablet terminal 52 may further include a microphone or a speaker. In that case, a user's voice picked up by the microphone or the like can also be recognized and used as an input command. Although not shown in Figure 5, the tablet terminal 52 may also be provided with a camera device, such as a CMOS, on the back face thereof or the like.

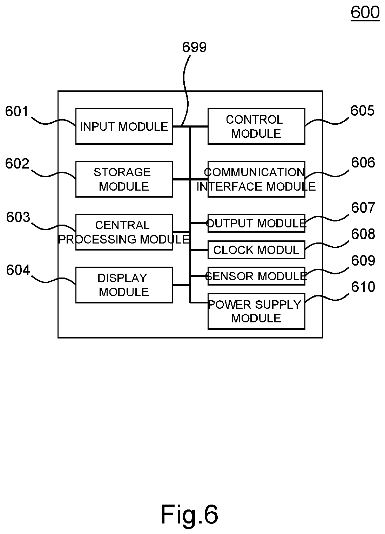

Figure 6 is a functional block diagram showing hardware forming the tablet terminal 52 according to one embodiment of the present invention. The operation of the tablet terminal 52 is provided by operation of each piece of hardware described below and cooperation of these pieces of hardware and software.

A tablet terminal 600, which is shown as the whole of a hardware block in Figure 6, is generally formed by an input module 601, a storage module 602, a central processing module 603, a display module 604, a control module 605, a communication interface module 606, an output module 607, a clock module 608, a sensor module 609, and a power supply module 610. The input module 601 includes the hardware button 523 or the multi-touch input panel provided in the display 522 shown in Figure 5 or the microphone, for example. The storage module 602 includes a hard disk, a RAM and/or a ROM for storing a program, data or the like, for example. The central processing module 603 includes a CPU that performs various numerical calculations or logical calculations according to a program. The display module 604 includes the display 522, for example. The control module 605 controls a chip or an electrical system, for example. The communication interface module 606 includes a slot for accessing the Internet, a port for optical communication, and a communication interface. The output module 607 includes a speaker, a vibrator, or an infrared projector, for example. The clock module 608 measures time, for example. The sensor module 609 includes an image sensor, such as a CMOS, an infrared sensor, or an inertial sensor, for example. The power supply module 610 supplies power to the modules in the tablet terminal 600. These modules are appropriately connected to each other by a communication bus or a power supply line (collectively shown as a connection line 699 for the sake of convenience in Figure 6, although the line 699 actually includes a plurality of different lines) as required.

Note that the sensor module 609 may include a GPS sensor module that locates the tablet terminal 600 (32). A signal from an image sensor, such as a CMOS, an infrared sensor or other sensor forming the sensor module 609 can be processed as input information by the input module 601.

A program or software required to implement the present invention executed on the tablet terminal 600 is typically installed or stored in an HDD, an SSD, a flash memory or the like forming the storage module 602. To execute the program or software, a part or the whole of the program or software is loaded as a software module into the memory in the storage module 602 as required and computationally executed by the CPU 603.

The computational execution necessarily does not have to be performed by the central processing module 603 such as the CPU, and can be performed by an auxiliary computing device, such as a digital signal processor (DSP), (not shown).

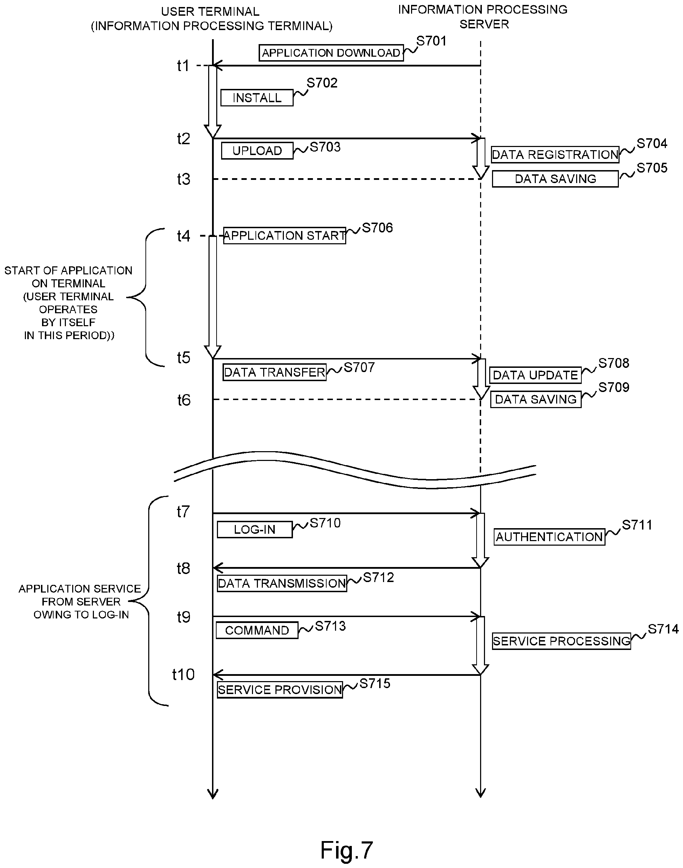

Figure 7 shows an example of a basic operation of the system, the devices and the like according to one embodiment of the present invention illustrated in Figures 1 to 3.

In Figure 7, the "user terminal" corresponds to the terminals 32 to 36 in Figure 3, and the "information processing server" corresponds to the management server 31 in Figure 3. In Figure 7, t1 to t10 represent a time sequence, and the operations or processes described below proceeds with time.

The operations and the points in time of processing (such as t1) in one embodiment are shown to facilitate understanding of the concept of the present invention, and the present invention is not limited to the specific time sequence illustrated in one embodiment.

At a point in time t1, the user (customer) downloads application software required to make the user terminal operate as the information processing terminal according to the present invention from the information processing server to the user terminal (Step S701). The application software is client software or application software for executing a part or the whole of the program according to the present invention. The user installs the downloaded application software in the user terminal (Step S702). At a point in time t2, the user terminal can upload the email address of the user and profile information, such as that shown in the following table as required, to the information processing server for user registration (Step S703) so that the email address and the profile information can be registered with and managed by the information processing server (Step S704).

**[Table 1]**

| Name (User Name) | Membership Number (ID) | Email Address (Cellular Phone Number) | Sex | Bracket) | Place of Residence (Area etc.) |
|---|---|---|---|---|---|
| | | | | | |

The data items listed above are saved as user data in the storage device on the information processing server (Step S705). From a point in time t3 on, the user (customer) can operate the information processing terminal to start the application (the server can start providing service to the terminal).

Having downloaded the application and installed the application in the user terminal, the user then activates the application software at a point in time t4 (Step S706). For example, from the point in time t4 to a point in time t5, the user receives the service provided to the information processing terminal from the information processing server.

At the point in time t5, the user suspends or terminates the application software according to one embodiment of the present invention. At this point in time, if necessary, the user terminal transfers status information on the application to the information processing server (Step S707), and the server receives the status information, updates the user information on the user with the status information (Step S708), and saves the updated user information (Step S709). In Figure 7, these processings are completed until a point in time t6.

Alternatively, after the application software according to one embodiment of the present invention is installed in the information processing terminal, at least a part of the application software may be executed on the terminal in a closed manner. In that case, the Steps S704 to S705 and S708 to S709 described above can be omitted, and any required information is saved and managed in the memory on the terminal.

In Figure 7, points in time t7 to t10 concern an example in which at least a part of the application software according to one embodiment of the present invention is executed on the information processing server. In this case, the user (customer) performs two typical user terminal operations, that is, a log-in operation and a command transmission, and receives required data from the information processing server or receives the service provided by the information processing server.

For example, at the point in time t7 in Figure 7, the user performs a processing of logging in to the server on the information processing terminal (Step S710), and the information processing server appropriately performs a required authentication processing (Step S711). At the point in time t8, the information processing server transmits data that allows the user to receive the service provided by the information processing server (Step S712). For example, data concerning a top menu window configured to receive a command on the terminal, or data concerning an application start window is transmitted.

At the point in time t9, the user transmits some command from the information processing terminal (Step S713). The command may be a choice of a menu displayed in the menu window or a start command to start the application displayed in the application start window. In response to receiving the command, the server starts a service processing (Step S714). At the point in time t10, a service requested by the terminal is provided from the server (Step S715).

Although not shown in Figure 7, the terminal can transmit a command (such as a message transmission command or a menu selection command) at any time even after the point in time t10, and each time the terminal transmits a command, the server can provide service in response to receiving the command (for example, the server transfers the received message to another terminal, or analyzes the message and transmits the analysis result back to the terminal).

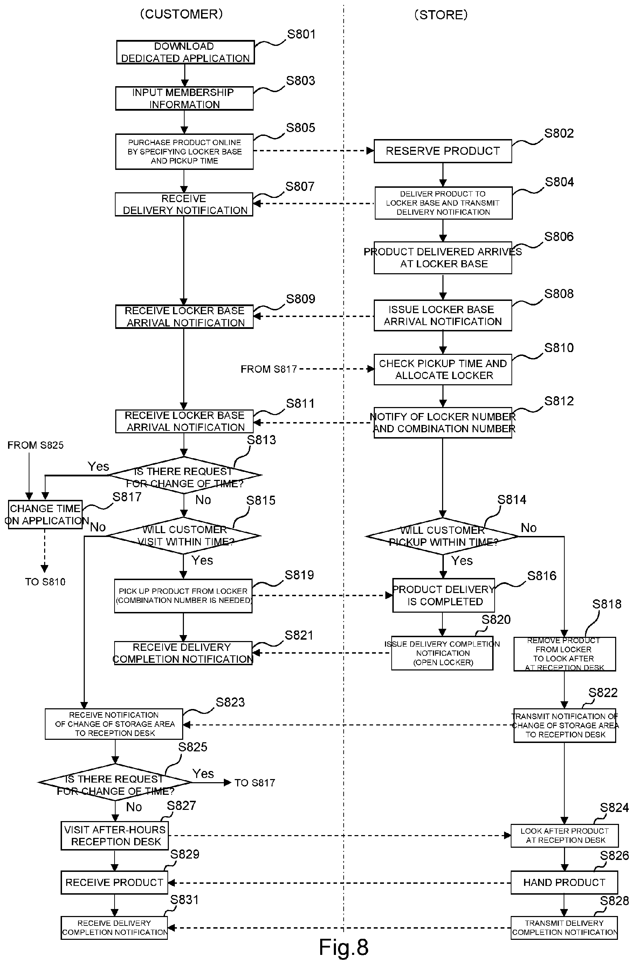

Figure 8 shows a flow of operations or processings performed in the locker management system according to one embodiment of the present invention. The operations or processings illustrated in the drawing are generally classified into those on the side of the customer (user) who is holding the customer terminal (user terminal) and those on the side of the store, such as delivery or reserve of products or issue of various notifications under the control of the management server or the base terminal.

In Step S801, the user downloads a dedicated application to their terminal. In this regard, various scenarios are possible as described above with reference to Figure 7, and downloading a dedicated application is not essential. In Step S803, as the first operation after starting of the application, the user inputs membership information (a specific example has been described above with reference to Figure 7).

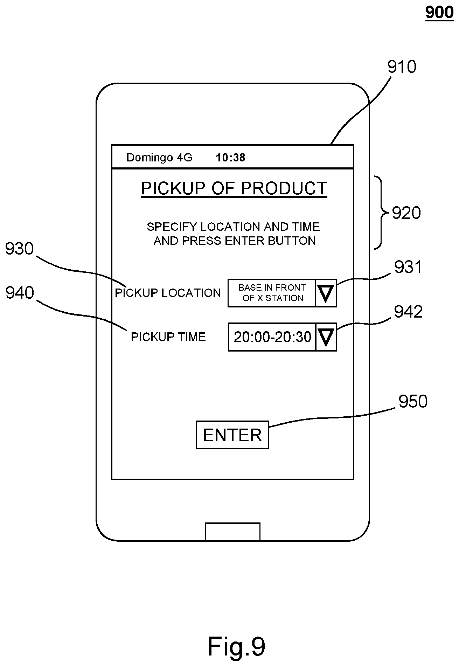

The process then proceeds to Step S805, in which the user uses their terminal to connect to a shopping server or an EC website (not shown) of the store to do online shopping. The product purchase procedure on the website can be a known procedure and therefore will not be described in detail herein. In this step, as an operation specific to one embodiment of the present invention, the user can specify a locker base (site) at which the user will pick up a product after purchasing the product and a pickup time zone (time). The product pickup location and the pickup time are specified in a GUI window shown in Figure 9, for example. Figure 9 shows an example of a window displayed on a user terminal 900, and a product pickup guide message 920, a pickup location selection field 930, a pickup location selection box 931, a pickup time specification field 940, a pickup time specification box 942 and a enter button 950 are shown on a display 910 of the terminal 900. The user operates the pickup location selection box 931 and the pickup time specification box 942 to select a pickup location (locker base) and a pickup time, and then presses the enter button 950 to enter the pickup location and the pickup time.

The time zone described above can be specified not only as a time zone from a particular time to a particular time of a day but also as a period of time, such as from a particular time of a particular day of a particular month to a particular time of a particular day of a particular month, of course. In this specification, both the specification of a period of time and the specification of a time of a day are referred to as the specification of the pickup time, for example.

In Step S805, the specified pickup location (locker base) and pickup time are transmitted from the user terminal to the store terminal (the management server 31 or the base terminal 202)

A payment processing may be performed at this point in time (the payment processing will not be described in detail here).

In Step S802, the product purchased by the user in Step S805 is stored in a logistics center or the like, the base terminal 202 or the management server 31 receives the pickup location (locker base) and pickup time for the product from the user terminal, and a preparation is made for delivery of the product to the pickup location (locker base) in the pickup time.

In Step S804, the product is delivered from the logistics center to the locker base, and the user terminal is notified of the delivery of the product (in Step S807, the user terminal receives this notification).

In Step S806, the purchased product delivered from the logistics center arrives at the locker base, and is unloaded at the locker base and handed to the staff member 206, for example. In Step S808, a notification that the purchased product has arrived at the locker base is issued. The notification may be issued by the base terminal 202 or the management server 31. The notification may be issued in response to an indication from the staff member 206 or automatically issued when the product is unloaded, for example.

In Step S809, the user terminal receives the arrival notification.

In Step S810, the pickup time specified in Step S805 is checked, and a box in the locker 201 is allocated (locker allocation). The check processing and the allocation processing may be performed by the staff member 206 or automatically performed by the base terminal 201 or the management server 31.

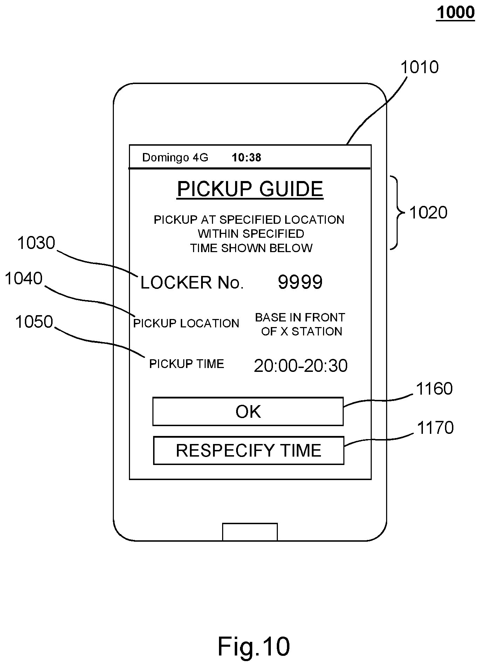

In Step S812, the locker number of the allocated locker and a combination number automatically generated before this step are transmitted to the user terminal. In Step S811, the user terminal receives the locker number and the combination number. The notification is displayed as shown in Figure 10, for example. Figure 10 shows an example of a window displayed on the user terminal 1000, and a product pickup guide message 1020, a locker number field 1030, a pickup location field 1040, a pickup time field 1050, an acknowledgement button 1160, and a respecification button 1170 are shown on a display 1010 of the terminal 1000. The user presses the acknowledgement button 1160, if there is no problem with the displayed pickup location and pickup time. If the user wants to respecify the pickup time, the user can move to a respecification window (not shown) by pressing the respecification button 1170 and respecify the pickup time.

Following Step S812, the process proceeds to Step S814. At an appropriate time before Step S814, the staff member 206 or the like puts the purchased product in the allocated locker (and sets the combination number at the same time).

After the combination number is received by the user terminal, the combination number is held in the user terminal as an encrypted code, which is to be wirelessly checked against the locker or the like, although the present invention is not limited to the implementation. In this case, the combination number does not have to be displayed as shown in Figure 10.

Alternatively, the user may manually input the combination number received by the user terminal at the locker, for example. In this case, although not shown in Figure 10, the combination number (or a two-dimensional code representing the combination number or an encrypted code thereof) is displayed.

What is to be noted is that the purchased product is not always put in the allocated locker immediately after Step S812. For example, when the specified pickup time for a product is from 18:00 to 20:00 of a particular day of a particular month, and there are 24 hours or more before that particular time, if there is any product for which a time zone before that particular time is specified, the latter product is preferentially put in the locker. Theoretically, it suffices to put any product in the locker only a little time before the specified pickup time, such as five or ten minutes before the specified pickup time. Any product or the like for which a predetermined time (such as 15 or 30 minutes) has elapsed since the specified pickup time can be removed from the locker and securely saved in another place in the locker base described later.

In Step S813, it is determined whether a request for respecification (change) of the pickup time is made by the user in the preceding step (Step S811). If Yes in Step S813, the process proceeds to Step S817, in which the application on the user terminal accepts the request for respecification (change) of the pickup time, and the process then returns to Step S810. If No in Step S813, the process proceeds to Step S815.

In Step S814 and/or Step S815, it is determined whether the user has visited the locker base within the specified time (or whether the user has picked up the purchased product within the specified time).

The determination in Steps S814 and S815 can be made on at least one of the customer side and the store side (for example, if the server or terminal in the store makes the determination, the server or terminal can notify the user terminal of the result of the determination). Basically, if the result in Step S814 is Yes, the result in Step S815 is also Yes, and if the result in Step S814 is No, the result in Step S815 is also No. In the following, the steps will be further described for the ease of understanding of the process.

If Yes in Step S815, the process proceeds to Step S819, in which the user opens the locker by wirelessly transmitting the combination number of the allocated locker from the user terminal to the locker 201, for example, and picks up the purchased product. In this step, the locker 201 (store) can detect that the product has been successfully removed (with an optical sensor or camera (not shown)) and thus can recognize that the delivery of the product is completed (Step S816). On the store side, the base terminal 201 or management server 31 issues a delivery completion notification. In Step S821, the user terminal receives the completion notification.

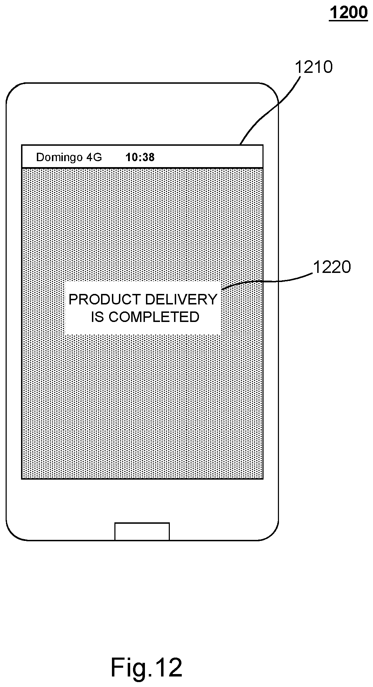

Figure 21 shows an example of the delivery completion notification received by the user terminal according to one embodiment of the present invention. Figure 12 shows an example of a window displayed on a user terminal 1200, and a product delivery completion message 1220 is displayed on a display 1210 of the terminal 1200. The user can move to another window (such as a menu window (not shown)) by pressing an arbitrary part of the screen or an OK button or the like (not shown).

If No in Step S814, the process proceeds to Step S818, in which the staff member 206 or the like opens the locker and removes the purchased product to look after the product at the reception desk. For example, the removed purchased product is stored in the storage area. The process then proceeds to Step S822, the store (the base terminal 202 or the management server 31) issues a notification of change of storage area to the reception desk. In Step S823, the user terminal receives the notification of change.

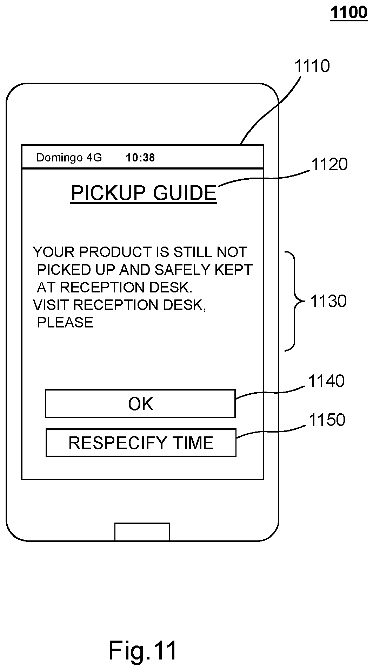

Figure 11 shows an example of a window displayed on the user terminal when the user terminal receives the notification of change in Step S823. Figure 11 shows an example of a window displayed on a user terminal 1100, and a product pickup guide message 1120, a message 1130 of change of storage area to the reception desk, an enter button 1140, and a respecification (change) button 1150 are shown on a display 1110 of the terminal 1100. If there is no problem with the displayed content, the user presses the enter button 1140. If the user wants to respecify the pickup time, the user can press the respecification (change) button 1150 to move to a respecification window (not shown), and can respecify or change the pickup time.

Following Step S823, the process proceeds to Step S825.

In Step S825, it is determined whether there is a request for respecification of the pickup time from the user in the preceding step (Step S823). If Yes, the process proceeds to Step S817, in which the application on the user terminal accepts the request for respecification of the pickup time, and the process returns to Step S810. If No in Step S825, the process proceeds to Step S827.

In Step S827, the user visits the locker base. In this step, the user does not pick up the purchased product from the locker 201 but visits the reception desk 203 for an after-hours reception procedure (a reception procedure in the hours after the purchased product has been removed from the locker 201). In Step S824, the staff member 206 or the like takes care of the user, and hands the purchased product stored in the storage area 204 or the like to the user (Step S826). In Step S829, the user receives the product from the staff member 206 or the like.

In Step S828, the completion of the delivery is recognized through signature input, terminal operation, automatic reading or the like (not shown), and the store (the base terminal 202 or the management server 31) transmits a delivery completion notification. In Step S831, the user terminal receives the completion notification. An example of a reception window displayed on the user terminal is shown in Figure 12 described above.

The locker management system according to an embodiment has been described above with regard to specific examples. The present invention can be embodied as a method or a program for implementing a system or a device or a recording medium in which the program is recorded (such as an optical disk, a magneto-optical disk, a CD-ROM, a CD-R, a CD-RW, a magnetic tape, a hard disk or a memory card), for example.

The implementation of the program is not limited to an application program, such as an object code compiled by a compiler or a program code executed by an interpreter, and may be a program module or the like incorporated in an operating system.

Furthermore, the program does not need to be totally executed by a CPU on a control board, but a part or the whole of the program may be executed by another processing unit (such as a DSP) implemented in an expansion board or expansion unit added to the board as required.

The components described in this specification (including Claims, Abstract and the drawings) and/or the steps of the method or process disclosed in this specification can be used in any combination, as far as the features are not incompatible with each other.

Each of the features described in this specification (including Claims, Abstract and the drawings) can be replaced with a substitute feature that serves the same, compatible or similar purpose, unless explicitly described otherwise. Therefore, each of the features disclosed is only an example of a comprehensive group of same or similar features, unless explicitly described otherwise.

Furthermore, the present invention is not limited to any of the specific configurations in the embodiment described above. The present invention can be expanded to all the novel features described in this specification (including Claims, Abstract and the drawings) or all combinations thereof, or steps of all the novel methods or all the novel processes described in this specification (including Claims, Abstract and the drawings) or all combinations thereof.

### Reference Signs List

10 locker management system
11-13 logistics center
14-16 locker base
201 electronically controlled locker
202 management terminal
203 reception desk
204 storage area
30 locker management system
31 management server
32 tablet terminal (a form of user terminal device)
33 cellular phone (a form of user terminal device)
34-36 PC (a form of user terminal device or base terminal)
37-38 POS terminal (a form of base terminal or mobile terminal for delivery)
47a-47c, 48 communication line
49 public line (such as dedicated line or the Internet)

## Claims

1. A locker management system, comprising a management server that manages a status of delivery of a product from one or more logistics centers to a plurality of locker bases and a status of storage of the product at a locker base over a predetermined period of time,
wherein the locker base is provided with an electronically controlled locker for storing the product, and
the management server
receives a specification of a locker base for storing the product and a specification of the predetermined period of time over which the product is stored at the locker base when the product is ordered from a terminal of a customer,
manages the predetermined period of time over which the product delivered from a logistics center to the locker base is stored in the electronically controlled locker, and
performs a check processing for allowing the product stored in the electronically controlled locker to be taken out of the electronically controlled locker if the customer visits the locker base within the predetermined period of time, or notifies the terminal of the customer that the product having been stored in the electronically controlled locker is now stored at another place in the locker base if the customer does not visit the locker base within the predetermined period of time.

2. The locker management system according to Claim 1, wherein the management server is a base terminal installed at the locker base.

3. The locker management system according to Claim 1 or 2, wherein the management server receives a request for change of the predetermined period of time from the terminal of the customer.

4. A program executed on a locker management system, the locker management system comprising a management server that manages a status of delivery of a product from one or more logistics centers to a plurality of locker bases and a status of storage of the product at a locker base over a predetermined period of time,
wherein the locker base is provided with an electronically controlled locker for storing the product, and
the program makes the management server perform:
a step of receiving a specification of a locker base for storing the product and a specification of the predetermined period of time over which the product is stored at the locker base when the product is ordered from a terminal of a customer;
a step of managing the predetermined period of time over which the product delivered from a logistics center to the locker base is stored in the electronically controlled locker; and
a step of performing a check processing for allowing the product stored in the electronically controlled locker to be taken out of the electronically controlled locker if the customer visits the locker base within the predetermined period of time, or notifying the terminal of the customer that the product having been stored in the electronically controlled locker is now stored at another place in the locker base if the customer does not visit the locker base within the predetermined period of time.

5. The program according to Claim 4, wherein the management server is a base terminal installed at the locker base.

6. The program according to Claim 4 or 5, wherein the program further makes the management server perform a step of receiving a request for change of the predetermined period of time from the terminal of the customer.
